(19) Europäisches Patentamt
European Patent Office
Office européen des brevets

(11) **EP 2 070 785 B1**

(12) **FASCICULE DE BREVET EUROPEEN**

(45) Date de publication et mention
de la délivrance du brevet:
**17.04.2013   Bulletin 2013/16**

(51) Int Cl.:
***B60T 8/1755*** *(2006.01)*   ***B60T 8/1761*** *(2006.01)*

(21) Numéro de dépôt: **08171125.1**

(22) Date de dépôt: **09.12.2008**

(54) **Procédé et dispositif de régulation de freinage**

Verfahren und Vorrichtung zur Bremsregelung

Braking control method and device

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **14.12.2007   FR 0759830**

(43) Date de publication de la demande:
**17.06.2009   Bulletin 2009/25**

(73) Titulaires:
• **Peugeot Citroën Automobiles Société Anonyme
78170 Vélizy Villacoublay (FR)**
• **Robert Bosch GmbH
70442 Stuttgart (DE)**

(72) Inventeurs:
• **Blaise, Philippe
25490 Dampierre les Bois (FR)**

• **Weber, Etienne
90360 La Chapelle sous Rougemont (FR)**
• **Bisserier, Eric
74182 Obersulm (DE)**
• **Ricosse, Sylvain
94300 Vincennes (FR)**
• **Pons, Fabien
92500 Rueil Malmaison (FR)**

(74) Mandataire: **Ménès, Catherine
PSA Peugeot Citroen
DRIA/PPIQ/VPI/BLE
18, rue des Fauvelles
92256 La Garenne Colombes (FR)**

(56) Documents cités:
**EP-A- 0 872 393       DE-A1- 19 539 345
FR-A- 2 626 830        FR-A1- 2 667 558
FR-A1- 2 841 200       US-A- 5 302 010
US-A1- 2003 214 182    US-A1- 2006 163 940**

**Description**

Le domaine de l'invention est celui du freinage des véhicules, notamment les véhicules automobiles, et concerne plus particulièrement un procédé et un dispositif de régulation de freinage prenant en compte le couple de freinage en fonction des conditions de circulation du véhicule.

Dans des conditions normales, il est possible de freiner un véhicule automobile ou de l'amener à l'arrêt de manière fiable et rapide. Toutefois, certaines conditions de conduite critiques telle qu'une chaussée mouillée ou glissante, une réaction de surprise du conducteur dû à un obstacle imprévu, un mauvais comportement d'autres usagers de la route, peuvent être à l'origine d'un blocage des roues au cours du freinage. Pour éviter que le véhicule ne devienne incontrôlable, au risque de quitter la chaussée, divers systèmes de régulation du couple de freinage ont vu le jour.

Le document EP 1136 335 A divulgue un procédé permettant d'éviter le blocage d'une roue d'un véhicule en évaluant le taux de glissement de cette roue sur la chaussée. On augmente ou on diminue le couple de freinage appliqué à la roue selon que ce taux est inférieur à une première limite ou supérieur à une seconde limite. Des valeurs limites sont liées par une loi croissante du rayon de courbure de la trajectoire du véhicule.

Le document FR 2893 294 A divulgue un procédé de stabilisation d'un véhicule dans lequel on freine plus fortement les roues arrière que les roues avant et on freine plus fortement une roue à l'intérieur d'une courbe qu'une roue à l'extérieur. Ce procédé nécessite de nombreux capteurs telle que la position du volant, la position de la pédale d'accélérateur ou de la pédale de frein.

Le document DE 195 39 345 A divulgue un système de freinage permettant de répartir différemment la force de freinage sur les quatre roues à partir d'un système simple exerçant habituellement une même force de freinage sur les quatre roues sans nécessiter de capteurs supplémentaires.

Ce système est susceptible d'amélioration pendant un redressement du véhicule. Un objet de l'invention est un procédé de régulation de freinage d'un véhicule, notamment un véhicule automobile, à partir d'une consigne de serrage de frein de roue du véhicule, en réponse à une commande de freinage. Le procédé comprend :

- une étape dans laquelle la consigne de serrage est diminuée lorsqu'un franchissement d'un critère d'instabilité sur une roue est détecté ;
- une étape dans laquelle une accélération latérale de la roue est calculée, une valeur non nulle de ladite accélération indiquant que le véhicule effectue un virage;
- une étape dans laquelle le critère d'instabilité est désensibilisé pour une roue extérieure au virage et le critère d'instabilité est sensibilisé pour une roue intérieure au virage en fonction de ladite accélération de valeur non nulle.

Particulièrement, le critère d'instabilité est plus fortement désensibilisé pour la roue extérieure et moins fortement sensibilisé pour la roue intérieure lorsque la valeur d'accélération latérale change de sens dans un intervalle de temps déterminé que lorsque la valeur d'accélération latérale reste de signe constant dans l'intervalle de temps.

Avantageusement, l'accélération latérale est calculée à partir d'au moins deux vitesses de roues d'un même essieu du véhicule.

Un objet de l'invention est aussi un dispositif de freinage comprenant des premiers moyens pour appliquer un serrage de frein de roue d'un véhicule et des deuxièmes moyens pour communiquer une consigne de serrage aux premiers moyens en réponse à une commande de freinage. Les deuxièmes moyens sont agencés pour exécuter le procédé conforme au premier objet.

D'autres caractéristiques et avantages de l'invention ressortiront clairement de la description qui en est faite ci-après, à titre indicatif et nullement limitatif, en référence aux dessins annexés, dans lesquels :

- la figure 1 est un schéma représentant un véhicule automobile effectuant un virage dans une courbe ;
- la figure 2 représente schématiquement un véhicule automobile effectuant un changement de file ;
- la figure 3 est un système de freinage de véhicule automobile ;
- les figures 4 et 5 montrent des étapes de procédés conformes à l'invention.

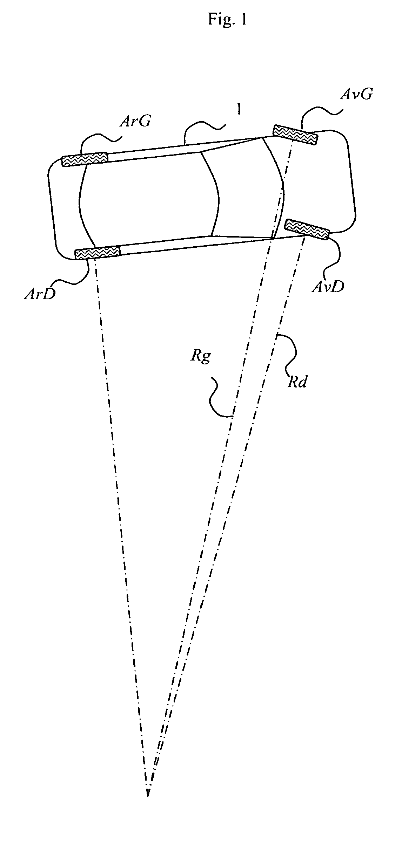

En référence à la figure 1, un véhicule 1 comprend une roue avant-gauche AvG, une roue avant-droite AvD, une roue arrière-gauche ArG et une roue arrière-droite ArD. Ici le véhicule 1 effectue un virage à droite selon une courbe sensiblement constante pour laquelle on distingue un rayon de courbure externe Rg et un rayon de courbure interne Rd correspondant respectivement à la roue avant-gauche et à la roue avant-droite.

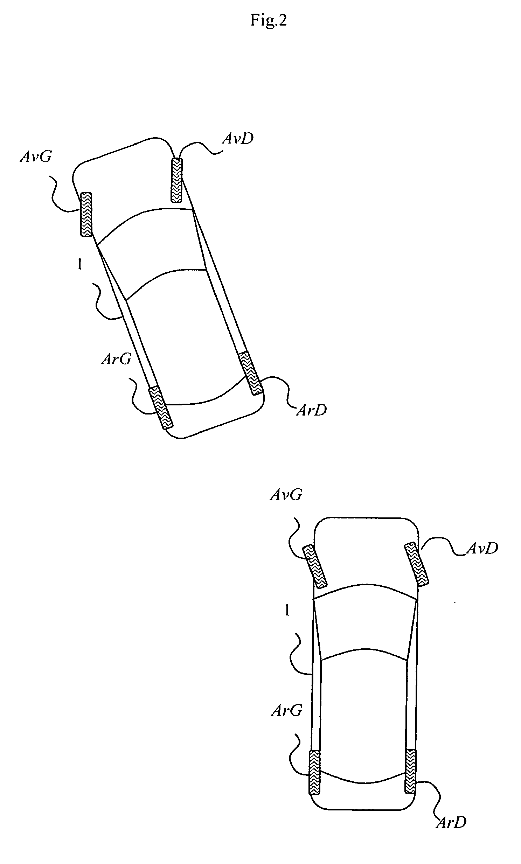

En référence à la figure 2, le véhicule 1 effectue un changement de file. Considérant l'évolution temporelle dans le sens de marche du véhicule, le véhicule 1 roulant sur la file de droite (partie inférieure droite de la figure 2), amorce un virage à gauche pour se déporter sur la file de gauche (partie supérieure gauche de la figure 2) puis, effectue un virage à droite pour se remettre parallèle au sens de la marche initiale.

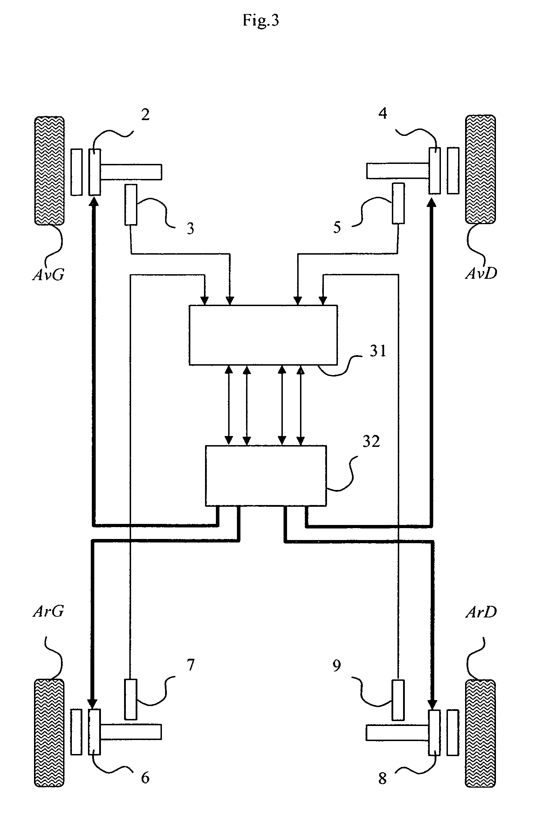

En référence à la figure 3, les roues AvG, AvD, ArG et ArD sont équipées chacune respectivement d'un frein 2, 4, 6, 8 alimentés par un groupe hydraulique 32 et d'un capteur de vitesse 3, 5, 7, 9. Les capteurs délivrent respectivement des signaux représentatifs des vitesses des roues, vitesses qui sont échantillonnées, selon des cycles d'échantillonnage déterminés, par une unité électronique 31. L'unité électronique 31 élabore un couple de freinage optimal pour chacune des roues. Plus précisément, l'unité électronique génère une consigne de pression de freinage qu'elle transmet au groupe hydraulique 32. Lorsque l'unité électronique détecte qu'une roue franchit un critère d'instabilité, elle diminue la consigne de pression jusqu'à retrouver la stabilité. On obtient ainsi un système de régulation de freinage de type ABS.

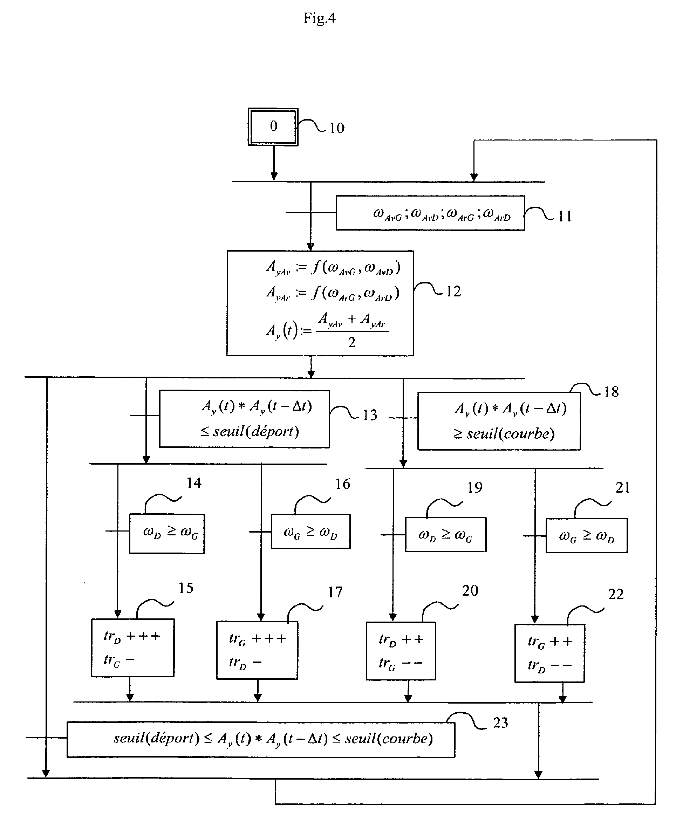

L'unité électronique 31 met en oeuvre le procédé décrit à présent en référence à la figure 4.

Le procédé selon l'invention consiste, à partir d'un système ABS simple avec seulement quatre capteurs de vitesse de roue, d'éviter ou de limiter la prise de dérive du véhicule lors des manoeuvres d'urgence. Ceci est rendu possible par l'amélioration de la logique de régulation de l'ABS.

A partir d'une étape initiale 10, par exemple activée au démarrage du véhicule, une transition 11 est validée, à chaque cycle d'échantillonnage des signaux délivrés par les capteurs de vitesse, par l'unité électronique 31.

Une validation de la transition 11 active une étape 12 dans laquelle l'unité électronique 31 calcule une accélération radiale avant $A_{yAv}$ et une accélération radiale arrière $A_{yAr}$ en fonction respectivement de chacune des vitesses de roues avant et de chacune des vitesses de roues arrières.

Si Vg et Vd sont les vitesses linéaires respectivement du moyeu de la roue gauche et du moyeu de la roue droite d'un même essieu de véhicule, leur différence définit une vitesse angulaire $\Omega$ du véhicule sur une ligne courbe avec respectivement un rayon de courbure Rg pour la roue gauche et un rayon de courbure Rd pour la roue droite selon la formule :

$$\Omega = \frac{Vg - Vd}{Rg - Rd}$$

La différence des rayons de courbure est une constante égale à la voie E qui, rappelons le, est l'écart qui sépare deux roues d'un même essieu.

Pour calculer l'accélération radiale Ay au centre de l'essieu, l'unité électronique 31 peut par exemple utiliser la formule :

$$A_y := \Omega \frac{Vg + Vd}{2} = \frac{(Vg - Vd)(Vg + Vd)}{2E}$$

Si $\omega_G$ et $\omega_D$ sont les vitesses de rotation respectivement de la roue gauche et de la roue droite, toutes deux de rayon r, la formule ci-dessus peut être réécrite sous la forme suivante :

$$A_y := \frac{r^2(\omega_G - \omega_D)(\omega_G + \omega_D)}{2E}$$

Soit sur l'essieu avant :

$$A_{yAv} := \frac{r^2(\omega_{AvG} - \omega_{AvD})(\omega_{AvG} + \omega_{AvD})}{2E}$$

Sur l'essieu arrière :

$$A_{yAr} := \frac{r^2(\omega_{ArG} - \omega_{ArD})(\omega_{ArG} + \omega_{ArD})}{2E}$$

L'unité électronique 31 mémorise la moyenne des accélérations avant et arrière en l'associant à l'instant t de validation de la transition 11 :

$$A_y(t) := \frac{A_{yAr} + A_{yAv}}{2}$$

A partir de l'étape 12, une transition 13 est validée lorsque le produit d'une première accélération radiale $A_y(t)$ par une deuxième accélération radiale $A_y(t-\Delta t)$, est inférieur à un premier seuil représentatif d'un déport. La première accélération radiale $A_y(t)$ est celle qui vient d'être calculée dans l'étape 12 et la deuxième accélération radiale $A_y(t-\Delta t)$ est celle qui a été calculée dans l'étape 12 à un instant t-$\Delta$t plus tôt. Lorsque le sens de l'accélération, en d'autres termes le signe de Ay, change pendant un intervalle de temps minimal déterminé et avec une amplitude minimale déterminée, une succession de deux virages de directions différentes, est représentative d'un changement de file.

Inversement à partir de l'étape 12, une transition 18 est validée lorsque le produit de la première accélération radiale $A_y(t)$ par la deuxième accélération radiale $A_y(t-\Delta t)$, est supérieur à un deuxième seuil représentatif d'un virage sur une trajectoire courbe. Lorsque le sens de l'accélération, en d'autres termes, le signe de Ay, reste constant pendant un intervalle de temps minimal déterminé et avec une amplitude minimale déterminée, la présence et la direction, à gauche ou à droite, d'un virage, est établie en fonction du signe.

On prédétermine un seuil de déport de valeur négative en deçà duquel la transition 13 est validée et un seuil de courbe de valeur positive au-delà duquel la transition 18 est validée. Entre ces deux valeurs de seuil choisies de valeur suffisamment faible pour pouvoir conserver les critères d'instabilité utilisés en ligne droite, le produit de deux accélérations latérales aux extrémités de l'intervalle de temps $\Delta$t, valide une transition 23 qui reboucle le procédé sur la transition 11.

A la suite de la transition 13, une transition 14 est validée si la vitesse $\omega_D$ de la roue droite est supérieure à la vitesse $\omega_G$ de la roue gauche. La roue extérieure au virage courant à l'instant t de validation de la transition 14, étant la roue droite, on est en présence d'un redressement à gauche après s'être déporté sur la droite.

A la suite de la transition 13, une transition 16 est validée si la vitesse $\omega_G$ de la roue gauche est supérieure à la vitesse $\omega_D$ de la roue droite. La roue extérieure au virage courant à l'instant t de validation de la transition 14, étant la roue gauche, on est en présence d'un redressement à droite après s'être déporté sur la gauche.

Une validation de la transition 14 active une étape 15 dans laquelle l'unité électronique 31 communique un critère d'instabilité moins sensible pour les roues du côté droit, à la régulation de freinage conventionnelle de type ABS de façon à augmenter fortement la traînée sur la ou les roues momentanément en extérieur de virage et communique un critère d'instabilité plus sensible pour les roues du côté gauche, à la régulation de freinage conventionnelle de type ABS de façon à diminuer légèrement la traînée sur la ou les roues momentanément en intérieur de virage afin de stabiliser le véhicule. En d'autres termes, le critère d'instabilité est désensibilisé pour une roue extérieure au virage et le critère d'instabilité est sensibilisé pour une roue intérieure au virage si l'accélération de valeur non nulle suffisante change de signe.

Une validation de la transition 16 active une étape 17 dans laquelle l'unité électronique 31 communique un critère d'instabilité, moins sensible pour les roues du côté gauche, à la régulation de freinage conventionnelle de type ABS, de façon à augmenter fortement la traînée sur la ou les roues momentanément en extérieur de virage, et communique un critère d'instabilité, plus sensible pour les roues du côté droit, à la régulation de freinage conventionnelle de type ABS, de façon à diminuer légèrement la traînée sur la ou les roues momentanément en intérieur de virage afin de stabiliser le véhicule.

A la suite de la transition 18, une transition 19 est validée si la vitesse $\omega_D$ de la roue droite est supérieure à la vitesse $\omega_G$ de la roue gauche. La roue extérieure au virage courant à l'instant t de validation de la transition 19, étant la roue droite, on est en présence d'un virage en courbe à gauche.

A la suite de la transition 18, une transition 21 est validée si la vitesse $\omega_G$ de la roue gauche est supérieure à la vitesse $\omega_D$ de la roue droite. La roue extérieure au virage courant à l'instant t de validation de la transition 21, étant la roue gauche, on est en présence d'un virage en courbe à droite.

Une validation de la transition 19 active une étape 20 dans laquelle l'unité électronique 31 communique un critère d'instabilité, moins sensible pour les roues du côté droit, à la régulation de freinage conventionnelle de type ABS, de façon à augmenter légèrement la traînée sur la ou les roues momentanément en extérieur de virage, et communique un critère d'instabilité, plus sensible pour les roues du côté gauche, à la régulation de freinage conventionnelle de type ABS, de façon à diminuer fortement la traînée sur la ou les roues momentanément en intérieur de virage afin de stabiliser le véhicule.

Une validation de la transition 21 active une étape 22 dans laquelle l'unité électronique 31 communique un critère d'instabilité moins sensible pour les roues du côté gauche, à la régulation de freinage conventionnelle de type ABS, de façon à augmenter légèrement la traînée sur la ou les roues, momentanément en extérieur de virage, et communique un critère d'instabilité, plus sensible pour les roues du côté droit, à la régulation de freinage conventionnelle de type ABS, de façon à diminuer fortement la traînée sur la ou les roues, momentanément en intérieur de virage, afin de stabiliser le véhicule. Le véhicule étant plus instable lorsque le véhicule décrit une courbe que lorsque le véhicule redresse pour se remettre dans un axe initial, le critère d'instabilité est plus fortement désensibilisé pour la roue extérieure et moins fortement sensibilisé pour la roue intérieure lorsque la valeur d'accélération latérale change de sens dans un intervalle de temps déterminé que lorsque la valeur d'accélération latérale reste de signe constant dans l'intervalle de temps.

Les étapes 15, 17, 20, 22 qui modifient les critères d'instabilité communiqués à la régulation ABS pour chaque roue, ont en commun de commander une « désensibilisation », en d'autres termes une diminution de sensibilité des critères d'instabilité ABS pour les roues intérieures et une « sensibilisation », en d'autres termes une augmentation de sensibilité des critères d'instabilité ABS pour les roues extérieures. La désensibilisation du critère d'instabilité ABS provoque un retardement de la détente des freins par le système de régulation de freinage ABS qui, en causant davantage de glissement, génère plus de traînée. Inversement une roue au critère d'instabilité très sensible, est très stable mais exerce une force de freinage plus limitée.

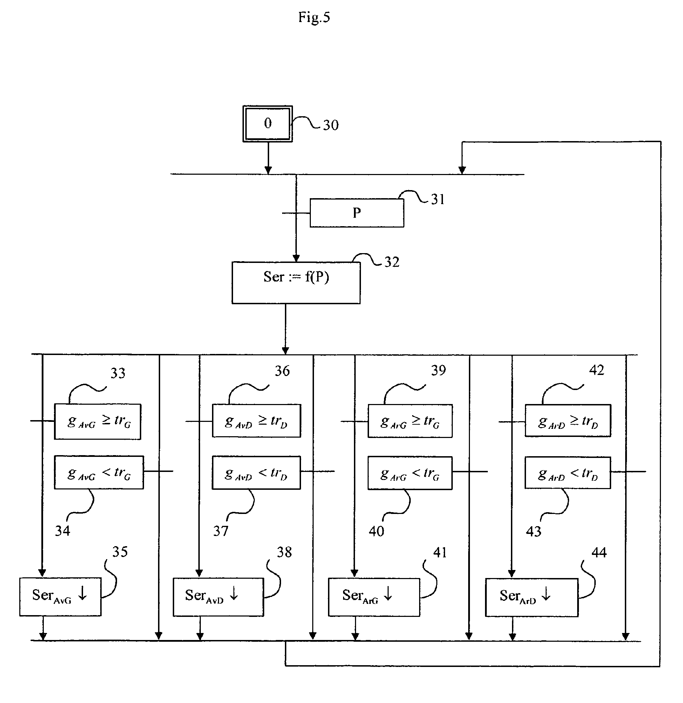

En référence à la figure 5, à partir d'une étape initiale 30, une transition 31 est validée à chaque cycle d'échantillonnage de capteurs disposés sur les organes de commande du véhicule, en particulier sur la pédale de frein.

Une validation de la transition 31 active une étape 32 dans laquelle l'unité électronique 31 calcule une consigne de serrage Ser en fonction d'une pression P exercée sur la pédale de frein par un utilisateur du véhicule et mesurée lors de la validation de la transition 31. La consigne de serrage est une variable commune à toutes les roues du véhicule ou préférentiellement un vecteur dont chaque composante est propre à chaque roue. A l'issue de l'étape 32, toutes les composantes du vecteur de consigne peuvent très bien avoir une même valeur. Dans l'étape 32, un glissement $g_{AvG}$, $g_{AvD}$, $g_{ArG}$, $g_{ArD}$ est calculé respectivement pour la roue avant gauche, la roue avant droite, la roue arrière gauche et la roue arrière droite, selon une méthode connue telle que par exemple celle qui résulte de l'enseignement du document EP1136335 A.

A partir de l'étape 32, un glissement $g_{AvG}$ supérieur au seuil $tr_G$ déterminé en étape 15, 17, 20 ou 22, atteint le critère d'instabilité et valide ainsi une transition 33 alors que dans le cas contraire une transition 34 est validée.

De même, à partir de l'étape 32, un glissement $g_{AvD}$ supérieur au seuil $tr_D$ valide une transition 36 et une transition 37 dans le cas contraire, un glissement $g_{ArG}$ supérieur au seuil $tr_G$ valide une transition 39 et une transition 40 dans le cas contraire, un glissement $g_{ArD}$ supérieur au seuil $tr_D$ valide une transition 42 et une transition 43 dans le cas contraire.

Une validation des transitions 34, 37, 40 et 43 reboucle le procédé sur la transition 31.

Une validation de la transition 33 active une étape 35 dans laquelle la consigne de serrage de frein de la roue avant gauche est diminuée.

Une validation de la transition 36 active une étape 38 dans laquelle la consigne de serrage de frein de la roue avant droite est diminuée.

Une validation de la transition 39 active une étape 41 dans laquelle la consigne de serrage de frein de la roue arrière gauche est diminuée.

Une validation de la transition 42 active une étape 44 dans laquelle la consigne de serrage de frein de la roue arrière droite est diminuée.

A partir des étapes 35, 38, 41 et 44, le procédé reboucle sur la transition 31 pour une exécution en temps réel.

**Revendications**

1. Procédé de régulation de freinage d'un véhicule, notamment un véhicule automobile, à partir d'une consigne de serrage (Ser) de frein de roue du véhicule, en réponse à une commande de freinage, comprenant une étape (35,38,41,44) dans laquelle la consigne de serrage est diminuée lorsqu'un franchissement d'un critère d'instabilité sur une roue est détecté;

   - une étape (12) dans laquelle une accélération latérale de la roue est calculée, une valeur non nulle de ladite accélération déterminant un virage du véhicule ; **caractérisé en ce qu'**il comporte de plus
   - une étape (15,17,20,22) dans laquelle le critère d'instabilité est désensibilisé pour une roue extérieure au virage et le critère d'instabilité est sensibilisé pour une roue intérieure au virage en fonction de ladite accélération de valeur non nulle, ledit critère d'instabilité étant plus fortement désensibilisé pour ladite roue extérieure et moins fortement sensibilisé pour ladite roue intérieure lorsque la valeur d'accélération latérale change de sens dans un intervalle de temps déterminé que lorsque la valeur d'accélération latérale reste de signe constant dans ledit intervalle de temps.

2. Procédé selon la revendication 1, **caractérisé en ce que** ladite accélération latérale est calculée à partir d'au moins deux vitesses de roues d'un même essieu du véhicule.

### EP 2 070 785 B1

**3.** Dispositif de freinage comprenant des premiers moyens (32) pour appliquer un serrage de frein de roue d'un véhicule et des deuxièmes moyens (31) pour communiquer une consigne de serrage (Ser) aux premiers moyens en réponse à une commande de freinage, **caractérisé en ce que** les dits deuxièmes moyens sont agencés pour :

- diminuer la consigne de serrage lorsqu'une atteinte de critère d'instabilité est détectée ;
- calculer une accélération, une valeur non nulle de ladite accélération déterminant un virage du véhicule ;
- désensibiliser le critère d'instabilité pour une roue extérieure au virage et sensibiliser le critère d'instabilité pour une roue intérieure au virage en fonction de ladite accélération de valeur non nulle, le critère d'instabilité étant plus fortement désensibilisé pour ladite roue extérieure et moins fortement sensibilisé pour ladite roue intérieure lorsque la valeur d'accélération latérale change de sens dans un intervalle de temps déterminé que lorsque la valeur d'accélération latérale reste de signe constant dans ledit intervalle de temps.

**4.** Dispositif selon la revendication 3, **caractérisé en ce que** les dits deuxièmes moyens sont agencés pour calculer ladite accélération latérale à partir d'au moins deux vitesses de roues d'un même essieu du véhicule.

## Claims

**1.** A braking control method of a vehicle, in particular a motor vehicle, from a wheel brake application set point (Ser) of the vehicle, in response to a braking command, including a step (35, 38, 41, 44) in which the application set point is reduced when an exceeding of an instability criterion is detected on a wheel,

- a step (12) in which a lateral acceleration of the wheel is calculated, with a non-zero value of the said acceleration determining a turning of the vehicle;
**characterized in that** is comprises in addition
- a step (15, 17, 20, 22) in which the instability criterion is desensitized for an outer wheel during turning and the instability criterion is sensitized for an inner wheel during turning as a function of the said acceleration of non-zero value, the said instability criterion being more highly desensitized for the said outer wheel and less highly sensitized for the said inner wheel when the lateral acceleration value changes direction in a determined interval of time than when the lateral acceleration value remains with a constant sign in the said time interval.

**2.** The method according to Claim 1, **characterized in that** the said lateral acceleration is calculated from at least two speeds of wheels of the same axle of the vehicle.

**3.** A braking device including first means (32) for applying a wheel brake application of a vehicle, and second means (31) to communicate an application set point (Ser) to the first means in response to a braking command, **characterized in that** the said second means are arranged to:

- reduce the application set point when a reaching of an instability criterion is detected;
- calculate an acceleration, with a non-zero value of the said acceleration determining a turning of the vehicle;
- desensitize the instability criterion for an outer wheel during turning and sensitize the instability criterion for an inner wheel during turning as a function of the said acceleration of non-zero value, the instability criterion being more highly desensitized for the said outer wheel and less highly sensitized for the said inner wheel when the lateral acceleration value changes direction in a determined time interval, than when the lateral acceleration value remains of constant sign in the said time interval.

**4.** The device according to Claim 3, **characterized in that** the said second means are arranged for calculate the said lateral acceleration from at least two speeds of wheels of the same axle of the vehicle.

## Patentansprüche

**1.** Verfahren zur Bremsregelung eines Fahrzeugs, insbesondere eines Kraftfahrzeugs, ausgehend von einem Anziehsollwert (Ser) einer Radbremse des Fahrzeugs als Reaktion auf eine Bremssteuerung, das einen Schritt (35, 38, 41, 44) aufweist, bei dem der Anziehsollwert verringert wird, wenn ein Überschreiten eines Instabilitätskriteriums auf einem Rad erfasst wird,

- einen Schritt (12), bei dem eine seitliche Beschleunigung des Rads berechnet wird, wobei ein Wert nicht gleich null der Beschleunigung eine Kurve des Fahrzeugs bestimmt,

**dadurch gekennzeichnet, dass** es ferner aufweist

- einen Schritt (15, 17, 20, 22), bei dem das Instabilitätskriterium für ein Rad außerhalb der Kurve desensibilisiert wird und das Instabilitätskriterium für ein Rad innerhalb der Kurve in Abhängigkeit von dem Beschleunigungswert nicht gleich null sensibilisiert wird, wobei das Instabilitätskriterium für das äußere Rad stärker desensibilisiert wird und für das innere Rad weniger stark sensibilisiert wird, wenn der seitliche Beschleunigungswert die Richtung in einem bestimmten Zeitintervall nur wechselt, wenn der seitliche Beschleunigungswert ein konstantes Vorzeichen in dem Zeitintervall behält.

2. Verfahren nach Anspruch 1, **dadurch gekennzeichnet, dass** die seitliche Beschleunigung ausgehend von wenigstens zwei Raddrehzahlen einer gleichen Achse des Fahrzeugs berechnet wird.

3. Bremsvorrichtung, die erste Mittel (32) zum Anlegen eines Radbremsenanziehens eines Fahrzeugs aufweist, und zweite Mittel (31), um einen Anziehsollwert (Ser) zu den ersten Mitteln als Reaktion auf eine Bremssteuerung zu kommunizieren, **dadurch gekennzeichnet, dass** die zweiten Mittel eingerichtet sind, um:

- den Anziehsollwert zu verringern, wenn ein Erreichen eines Instabilitätskriteriums erfasst wird,
- eine Beschleunigung zu berechnen, wobei ein Wert nicht gleich null der Beschleunigung eine Kurve des Fahrzeugs bestimmt,
- das Instabilitätskriterium für ein Rad außerhalb der Kurve zu desensibilisieren und das Instabilitätskriterium für ein Rad innerhalb der Kurve in Abhängigkeit von dem Beschleunigungswert nicht gleich null zu sensibilisieren, wobei das Instabilitätskriterium für das äußere Rad stärker desensibilisiert wird und für das innere Rad weniger stark sensibilisiert wird, wenn der Wert der seitlichen Beschleunigung die Richtung in einem bestimmten Zeitintervall nur wechselt, wenn der seitliche Beschleunigungswert in dem Zeitintervall ein konstantes Vorzeichen behält.

4. Vorrichtung nach Anspruch 3, **dadurch gekennzeichnet, dass** die zweiten Mittel eingerichtet sind, um die seitliche Beschleunigung ausgehend von wenigstens zwei Raddrehzahlen einer gleichen Achse des Fahrzeugs zu berechnen.

Fig. 1

Fig.2

Fig.3

Fig.4

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1136335 A
- FR 2893294 A

- DE 19539345 A